# EUROPEAN PATENT SPECIFICATION

(11) **EP 0 860 234 B1**
(45) Date of publication and mention of the grant of the patent: **09.04.2003**
(21) Application number: 98200455.8
(22) Date of filing: 02.02.1998
(51) Int. Cl.: B23Q 3/18

(54) **Tool and toolholder coupling device**
Vorrichtung zur Kupplung eines Werkzeugs mit einem Werkzeughalter
Dispositif d'accouplement pour un outil et un porte-outil

(30) Priority: 07.02.1997 IT MI970087 U
(43) Date of publication of application: 26.08.1998
(73) Proprietor: REGINA INDUSTRIA S.p.A., I-20092 Cinisello Balsamo (MI) (IT)
(72) Inventor: Coscia, Gianfranco, 23807 Merate (Lecco) (IT)
(74) Representative: Faraggiana, Vittorio, Dr. Ing.

(56) References cited:
- EP-A- 0 734 804
- GB-A- 2 163 379
- US-A- 4 747 735
- US-A- 5 452 631
- "SCHLEIFEN VON KEGELVERBINDUNGEN EINES WERKZEUGSYSTEMS" VDI Z, vol. 131, no. 1, January 1989, pages 63-67, XP000025503 duesseldorf

## Description

The present invention relates to an innovative tool and toolholder coupling device of the type used in the automatic handling of tools in machine tools.

In the prior art, tools comprising a tapered tang designed for snap fastening alternatively in the machine or in a complementary tapered seat of a toolholder in a tool handling device are well known. The tang coupling takes place by means of appropriate seats therein in which are inserted locking balls of the toolholder. In the rear of the toolholder there is an uncoupling pin which moves axially, elastically or thrust by an appropriate drive to free the movement of the balls and allow extraction of the tool.

The form of the tang on the rear of the tool is standardized, for example in accordance with DIN std 69893 for fastening in the machine. This tang has a tapered external form and a generally cylindrical internal cavity with appropriate undercuts for engagement of the balls.

In the prior art the seat in the toolholder is also tapered to receive the tapered tang and position it both axially and radially thanks to the tapered mating which is thus realized with a principle similar to that used for positioning the tool in the machine.

The taper-to-taper mating arrangement even though used universally has the disadvantage that a very small error in the taper of the seat or its diameter leads to large axial positioning errors. The taper error can be produced by a defect in the machining or heat treatment of the seat or even stresses produced in the toolholder such as for example those developed during fitting of the joining members of the toolholder with the handling members (sometimes made in the form of chains in which the toolholder constitutes a link pin). The lack of axial positioning precision can also lead to defective coupling of the locking balls which cannot work correctly. The small mating taper can also lead to sticking between the tang of the tool and the toolholder.

In addition the taper-to-taper mating can lead to damaging the tapered tang or the tool end flange which are relatively delicate due the great positioning precision .which the tool must have in the machine.

US-A-5,452,631 discloses a coupling between a tool and a toolholder according to the preamble of claim 1, wherein the radial positioning of the tool in the toolholder is obtained through a coupling with minimal play between the tool tang and a bush projecting from the toolholder. The axial positioning of the tool is obtained by abutment of the front edge of the toolholder against an outer flange of the tang, radially extending around its base. This coupling is not satisfactory, because said abutment for axial positioning can cause unwanted damages to the above mentioned surfaces of the tang which are designed to form the effective contact surfaces of the tool when the tool is positioned on the spindle of a working machine.

The general purpose of the present invention is to obviate the above mentioned shortcomings by making available a coupling between tool and toolholder which would allow correct positioning and locking of the tool without use of the tang taper.

In view of this purpose it was sought to provide in accordance with the present invention a tool and toolholder coupling device as claimed in claim 1.

To clarify the explanation of the innovative principles of the present invention and its advantages compared with the prior art there is described below with the aid of the annexed drawings possible embodiments thereof by way of non-limiting example applying said principles. In the drawings:
- Fig. 1 shows an axial cross section of a prior art toolholder,
- Fig. 2 shows an axial cross section of a toolholder in accordance with the present invention, and
- Fig. 3 shows a scrap view of an alternative embodiment of the toolholder of Fig. 2.

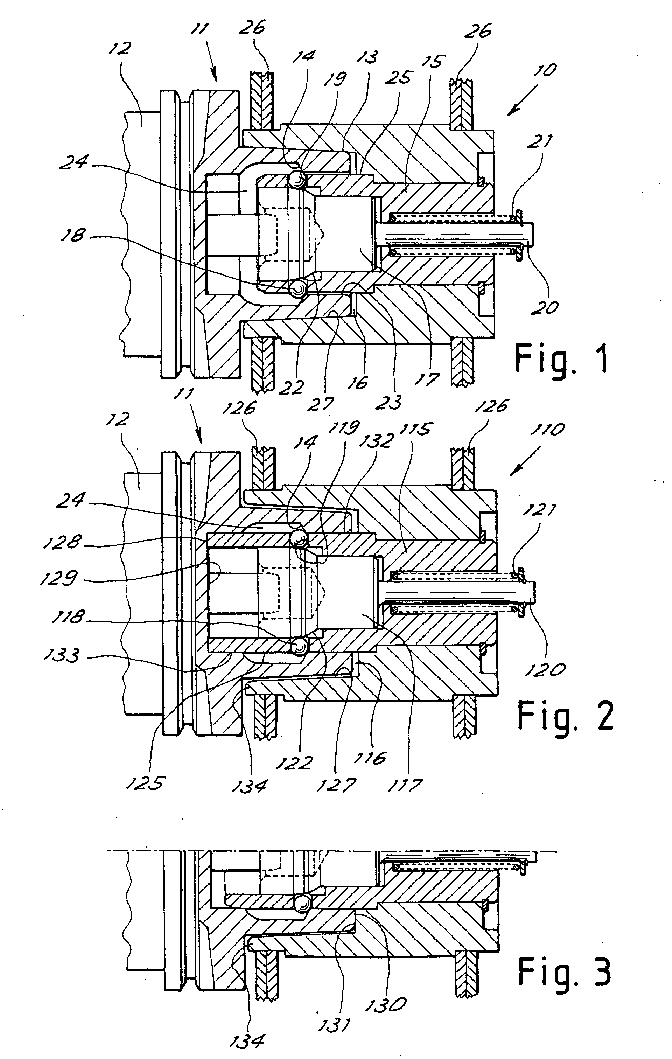

With reference to the figures Fig. 1 shows a cross section of a prior art toolholder indicated as a whole by reference number 10 receiving the coupling tang 11 of a tool 12.

The tool is only shown partially because it could be of any known type. The tang is in general the standardized type, for example UNI 69893. It has a tapered outer surface 13 and an internal cavity 24 open at the rear providing a coupling undercut 14.

The toolholder 10 is supported on a chain 26 and has a seat 16 for reception of the tang in which projects a ball-holder bush 15. In the ball-holder bush runs axially a locking member 17 for balls 18 which are received in seats 19 of the bush 15 to project into the seat 16. The seats are shaped to prevent complete escape of the balls. The locking member 17 for the balls extends at the rear of the toolholder with a pin 20 on which acts a spring 21 which holds the locking member in a retracted position as shown in Fig. 1 to prevent the balls from withdrawing from the seats 19.

The locking member has a tapered undercut 22 arranged in such a way that with the movement of the pin 20 towards the interior of the bush 15 the undercut moves to a position opposite the balls 18. The balls can thus withdraw freely towards the interior of the bush. As know to those skilled in the art the movement of the pin towards the retracted position of the balls can be secured through direct action on the projecting end of the pin 20 or, by appropriately sizing the inclined planes, through traction of the tool with sufficient force.

The seat 16 for reception of the tang of a tool has a tapered side wall 27 in order to mate perfectly with the taper of the tang. The part 25 of the bush 15 projecting into the seat 16 is cylindrical and has an outside diameter less than the inside diameter of the cylindrical mouth 23 of the cavity 24 of the tang in order to leave play between the cylindrical wall 25 of the bush and the cylindrical wall 23 of the tang and not interfere with the tapered coupling between the tang and the toolholder. It is clear from Fig. 1 that the machining of the tapered wall 27 which receives the tang must be of great precision to ensure correct axial positioning of a tang inserted in the toolholder so that the balls engage the corresponding undercut 14. The tapered coupling provides a striker both for radial positioning without play and axial positioning of the tool. In practice the seat 16 has a tapered wall 27 which must be made with perfect respect of the standards (DIN 69893 for example) for fabrication of the tool tang. Machining of the toolholder is thus costly and involves all the above mentioned disadvantages.

It is clear that even if the taper of the toolholder seat is provided with sufficient precision, the forced fitting of the chain link 26 on the toolholder or the heat treatment could cause minimal but unacceptable distortion of the seat mouth.

Fig. 2 shows a coupling between tool and toolholder 110 made in accordance with the present invention and which obviates all the disadvantages present in the prior art described. For the sake of convenience the reference numbering of the parts shown in Fig. 2 follows that of similar parts of Fig. 1 with the addition of 100. The tool shown in Fig. 2 is the same generic tool 12 with standard tang 11 shown in Fig. 1.

The toolholder 110 can be supported on a chain 126 or a handling disk of a prior art handling system (not shown) and has a seat 116 for reception of the tang in which projects a bush 115.

Balls 118 are received in seats 119 of the bush 115 to project into the seat 116 and constitute releasable constraint means for the tool tang in the toolholder. The seats are shaped to prevent complete escape of the balls. In the ball-holder bush a member 117 runs axially for releasable locking of the ball retraction.

For example the ball-locking member 117 extends rearward of the toolholder with a pin 120 on which acts a spring 121 which holds the locking member in retracted position to prevent retraction of the balls while holding a tang locked in the seat.

The locking member has a tapered undercut 122 which upon axial movement of the pin 120 towards the interior of the bush 115 permits the balls to withdraw and thus free the tool tang. For example, operation of the locking member towards the unlocked position of the balls can be controlled by acting on the end of the pin or as an alternative by appropriate sizing of the inclined planes as a simple elastic action given by traction on the tool. In accordance with the present invention the seat 116 receives the tool tang with side play so that the wall 127 of the seat does not provide tapered coupling with the tool tang.

The side wall of the seat can also be tapered to facilitate entry of the tang but this is not strictly necessary.

Again contrary to the prior art the cylindrical part 125 of the bush 115 projecting into the seat 116 is sized to be received with minimal side play in the cylindrical mouth 23 of the tool cavity 24. In practice this cylindrical part 125 is provided to satisfy the dimensional standards of the tang cavity 24. The end of the cylindrical part 125 extends sufficiently to identify a second side contact surface 133 for side contact with the tang cylindrical cavity 24. This second contact surface is near the front end of the bush.

There are thus two side contact surfaces 132, 133 offset along the tool axis and respectively before and after the balls in the direction of insertion of the tang in the seat and there is secured adequate transversal stability of the coupling.

In the coupling the radial position reference of the tool in the toolholder with minimal play is supplied by the cylindrical coupling between the two parts. The tool axial position reference is supplied by the front plane surface resting on the tang and the toolholder. For example, in the toolholder of Fig. 2 the axial striker is provided by the resting of the end surface 128 of the bush 115 against the edge zone 129 of the bottom of the tang cavity 24.

In a possible embodiment variation shown in Fig. 3 the axial striker can be supplied by the resting of the tang end surface 130 against the bottom 131 of the toolholder seat 116.

It is noted that in both embodiments the tang receiving seat edge 134 is preferably held at a distance from the facing wall of the tang.

It is now clear that the preset purposes have been achieved.

By dividing the axial and radial positioning functions the construction of the toolholder is much simpler and the tolerances are less stringent than those required by the prior art toolholders with tapered coupling. Production costs are thus less than those of prior art toolholders. In addition the larger tolerances permitted by the toolholder in accordance with the present invention make tool positioning and clamping precise and effective even for small toolholder distortions. In particular, any distortions caused by forced fitting of the chain or heat treatment do not interfere with correct operation of the toolholder.

Naturally the above description of an embodiment applying the innovative principles of the present invention is given by way of non-limiting example of said principles within the scope of the exclusive right claimed here.

For example, depending on the specific requirements changes can be made in the proportions between the various parts or different releasable coupling means, controlled or elastic, can be used for the tool in the toolholder. In addition the toolholders can be assembled in the chain in place of the chain pin or laterally to the chain or on disks.

## Claims

1. Tool and toolholder coupling device in which the tool comprises a support tang (11) projecting therefrom and defining internally an axial cavity (24) having a bottom (129) and being open on the head end of the tang and the toolholder comprises a front seat (116) for reception of the tang, the seat (116) having a bottom (131), and a bush (115) projecting in the seat (116) to be received in the cavity (24) of the tang, the bush (115) supporting releasable coupling means (118) for a tool in the toolholder, the tang (11) being received in the seat (116) with play between the side surface of the tang and the side surface of the seat and the bush (115) being received in the cavity (24) with minimal play between its own side surfaces (132,133) and corresponding side surfaces (23) in the cavity to define the radial position between the tang and the toolholder, the toolholder further comprising surfaces virtually transversal to its axis which are faced upon corresponding surfaces of the tang in the direction of insertion of the tang (11) in the seat (116) to define the axial position of the tang in the seat through contact of said facing surfaces, **characterized in that** the contact of said facing surfaces occurs between the bottom (129 or 131) of the cavity (24) or of the seat (116) and an end surface (128 or 130) of the bush (115) or of the tang (11), respectively.

2. Tool and toolholder coupling device in accordance with claim 1 **characterized in that** the releasable coupling means comprise balls (118) moving between a position projecting radially from the bush and a position retracted in the bush with the bush (115) containing a member (17) running axially between a position locking the balls in their projecting position and an unlocking position in which it allows movement of the balls towards their retracted position with the balls (118) in their projecting position engaging in undercuts (14) in the axial cavity of the tang in such a manner as to lock the tool to the toolholder.

3. Tool and toolholder coupling device in accordance with claim 1 **characterized in that** the above mentioned side surfaces of the bush comprise a first (132) and a second (133) side surface arranged respectively before and after the balls (118) in the direction of insertion of the tang in the seat.

4. Tool and toolholder coupling device in accordance with claim 3 **characterized in that** the second side surface (133) is arranged near the front end (128) of the bush and the corresponding surface (23) in the cavity is near the bottom of the cavity.

5. Tool and toolholder coupling device in accordance with claim 1 **characterized in that** the tool tang is dimensioned in conformity with DIN standard 69893.

## Patentansprüche

1. Kupplungsvorrichtung zum Kuppeln eines Werkzeuges mit einem Werkzeughalter, wobei das Werkzeug einen davon wegragenden Lagerschaft (11) mit einem axialen Hohlraum (24) aufweist, der einen Boden (129) hat und zum Kopfende des Lagerschaftes hin offen ist, und der Werkzeughalter einen vorderen Sitz (116) zur Aufnahme des Lagerschaftes aufweist, wobei der Sitz (116) einen Boden (131) hat, und eine aus dem Sitz (116) auskragende Hülse (115) zur Aufnahme in dem Hohlraum (24) des Schaftes vorgesehen ist, wobei die Hülse (115) lösbare Kupplungsmittel (118) für ein Werkzeug in dem Werkzeughalter unterstützt, der Lagerschaft in dem Sitz (116) mit Spiel zwischen der Seitenfläche des Schaftes und der Seitenfläche des Sitzes aufgenommen ist und die Hülse (115) in dem Hohlraum (24) mit minimalem Spiel zwischen ihren eigenen Seitenflächen (132,133) und entsprechenden Seitenflächen (23) im Hohlraum aufgenommen ist, um die radiale Stellung zwischen Lagerschaft und Werkzeughalter zu definieren, wobei der Werkzeughalter ferner im wesentlichen quer zu seiner Achse verlaufende Flächen aufweist, die entsprechenden Flächen des Lagerschaftes in Einführrichtung des Lagerschaftes (11) in den Sitz (116) zugewandt sind, um die axiale Stellung des Lagerzapfens in dem Sitz durch Kontakt zwischen den einander zugewandten Flächen zu definieren, **dadurch gekennzeichnet, daß** der Kontakt der einander zugewandten Flächen zwischen dem Boden (129 oder 131) des Hohlraums (24) oder des Sitzes (116) und einer Endfläche (128 oder 130) der Hülse (115) oder des Lagerschaftes (11) stattfindet.

2. Kupplungsvorrichtung nach Anspruch 1, **dadurch gekennzeichnet, daß** die lösbaren Kupplungsmittel Kugeln (118) umfassen, die sich zwischen einer radial von der Hülse vorragenden Stellung und einer in die Hülse zurückgezogenen Stellung bewegen, wobei die Hülse (115) ein Bauteil (17) aufweist, das axial zwischen einer die Kugeln in ihrer vorragenden Stellung blockierenden Position und einer Löseposition beweglich ist, in welcher die Kugeln in ihre zurückgezogene Stellung rollen können, wobei die Kugeln (118) in ihrer vorragenden Stellung in Hinterschnitte (14) im axialen Hohlraum des Lagerschaftes hineinragen, so daß sie das Werkzeug im Werkzeughalter verriegeln.

3. Kupplungsvorrichtung nach Anspruch 1, **dadurch gekennzeichnet, daß** die erwähnten Seitenflächen der Hülse eine erste (132) und eine zweite (133) Seitenfläche aufweisen, die in Einführrichtung des Lagerschaftes in den Sitz gesehen vor beziehungsweise hinter den Kugeln (118) angeordnet sind.

4. Kupplungsvorrichtung nach Anspruch 3, **dadurch gekennzeichnet, daß** die zweite Seitenfläche (133) nahe dem vorderen Ende (128) der Hülse und die entsprechende Fläche (23) im Hohlraum nahe dem Boden des Hohlraumes angeordnet sind.

5. Kupplungsvorrichtung nach Anspruch 1, **dadurch gekennzeichnet, daß** der Lagerschaft entsprechend DIN 69893 dimensioniert ist.

## Revendications

1. Dispositif d'accouplement pour un outil et un porte-outil dans lequel l'outil comporte une soie de support (11) faisant saillie de ce dernier et définissant à l'intérieur une cavité axiale (24) ayant un fond (129) et étant ouverte sur l'extrémité de tête de la soie et le porte-outil comporte un siège avant (116) destiné a recevoir la soie, le siège (116) ayant un fond (131), et une bague (115) faisant saillie dans le siège (116) pour être reçue dans la cavité (24) de la soie, la bague (115) soutenant des moyens d'accouplement (118) d'un outil dans le porte-outil, susceptibles de dégagement, la soie (11) étant reçue dans le siège (116) avec jeu entre la surface latérale de la soie et la surface latérale du siège et la bague (115) étant reçue dans la cavité (24) avec un jeu minimum entre ses propres surfaces latérales (132, 133) et les surfaces latérales correspondantes (23) dans la cavité, à définir la position radiale entre la soie et le porte-outil, le porte-outil comprenant en outre des surfaces virtuellement transversales à son axe lesquelles se trouvent en regard de surfaces correspondantes de la soie dans la direction d'insertion de la soie (11) dans le siège (116) à définir la position axiale de la soie dans le siège à travers le contact desdites surfaces en regard, **caractérisé en ce que** le contact desdites surfaces en regard se produit respectivement entre le fond (129 ou 131) de la cavité (24) ou du siège (116) et une surface d'extrémité (128 ou 130) de la bague (115) ou de la soie (11).

2. Dispositif d'accouplement pour un outil et un porte-outil selon la revendication 1, **caractérisé en ce que** les moyens d'accouplement susceptibles de dégagement comportent des billes (118) mobiles entre une position à laquelle elles font saillie de la bague en sens radial et une position rétractée dans la bague, la bague (115) contenant un élément (17) coulissant en sens axial entre une position de blocage des billes à leur position saillante et une position débloquée à laquelle il permet le mouvement des billes vers leur position rétractée, les billes (118) à leur position saillante s'engageant dans des creux (14) dans la cavité axiale de la soie de manière à verrouiller l'outil au porte-outil.

3. Dispositif d'accouplement pour un outil et un porte-outil selon la revendication 1, **caractérisé en ce que** les surfaces latérales précitées de la bague comportent une première (132) et une deuxième (133) surfaces latérales disposées respectivement avant et après les billes (118) dans la direction d'insertion de la soie dans le siège.

4. Dispositif d'accouplement pour un outil et un porte-outil selon la revendication 3, **caractérisé en ce que** la deuxième surface latérale (133) est disposée à proximité de l'extrémité avant (128) de la bague et la surface correspondante (23) dans la cavité est proche du fond de la cavité.

5. Dispositif d'accouplement pour un outil et un porte-outil selon la revendication 1, **caractérisé en ce que** la soie de l'outil est dimensionnée suivant la spécification DIN 69893.
